# EUROPEAN PATENT APPLICATION

(11) **EP 4 277 384 A1**
(43) Date of publication of application: **15.11.2023**
(21) Application number: 22736856.0
(22) Date of filing: 06.01.2022
(51) Int. Cl.: H04W 72/02, H04W 72/04, H04W 72/12, H04W 4/40, H04W 92/18

(54) **METHOD AND DEVICE FOR RESOURCE SELECTION BASED ON MODE 2 IN SIDELINK COMMUNICATION**

(30) Priority: 07.01.2021 KR 20210002128; 26.05.2021 KR 20210067743
(71) Applicant: HYUNDAI MOTOR COMPANY, Seoul 06797 (KR); Kia Corporation, Seocho-gu Seoul 06797 (KR)
(72) Inventor: HONG, Ui Hyun, Hwaseong-si, Gyeonggi-do 18280 (KR); HAHN, Gene Back, Hwaseong-si, Gyeonggi-do 18280 (KR)
(74) Representative: Viering, Jentschura & Partner mbB Patent- und Rechtsanwälte
(86) International application number: PCT/KR2022/000238
(87) International publication number: WO 2022/149879

(57) **Abstract**

A method and a device for resource selection based on mode 2 in sidelink communication are disclosed. An operating method of a first terminal comprises the steps of: receiving first resource set information from a second terminal; selecting a candidate resource on the basis of a first resource set indicated by means of the first resource set information and/or a second resource set determined by means of a resource sensing operation performed in the first terminal; and performing sidelink communication on the basis of the candidate resource.

## Description

### [Technical Field]

The present disclosure relates to a sidelink communication technique, and more particularly, to a technique for improving a mode 2-based resource selection operation.

### [Background Art]

A fifth-generation (5G) communication system (e.g., New Radio (NR) communication system) which uses a frequency band higher than a frequency band of a fourth-generation (4G) communication system (e.g., Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g., C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g., C-V2X communications) may be performed based on sidelink communication technologies (e.g., Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g., periodic sidelink data) may be transmitted using the CG resources.

Meanwhile, a terminal may determine one or more candidate resources by performing a sensing operation within a sensing window, determine transmission resource(s) from among the one or more candidate resources by performing a selection operation within a selection window, and perform sidelink communication using the transmission resource(s). However, sidelink transmissions may collide due to a hidden node problem, an exposed node problem, a half-duplex operation problem, and/or the like. To solve this problem, an inter-user equipment (UE) coordination operation may be required.

### [Disclosure]

### [Technical Problem]

The present disclosure is directed to providing a method and an apparatus for resource selection based on a mode 2 in sidelink communication.

### [Technical Solution]

An operation method of a first terminal, according to a first exemplary embodiment of the present disclosure for achieving the above-described objective, may comprise: receiving first resource set information from a second terminal; selecting a candidate resource based on at least one of a first resource set indicated by the first resource set information or a second resource set determined by a resource sensing operation performed in the first terminal; and performing sidelink communication based on the candidate resource, wherein the first resource set is a preferred resource set or a not-preferred resource set.

The operation method may further comprise: receiving a resource type indicator indicating whether the first resource set is the preferred resource set or the not-preferred resource set.

When the resource sensing operation is not performed in the first terminal, the candidate resource may be selected in consideration of only the first resource set.

When both the first resource set and the second resource set are considered for selection of the candidate resource, the candidate resource may be selected as an intersection of the first resource set and the second resource set, a difference between the first resource set and the second resource set, or a union of the first resource set and the second resource set.

When an initial transmission data unit is transmitted in the sidelink communication, the intersection or the difference may be selected as the candidate resource for the initial transmission data unit, and when a retransmission data unit is transmitted in the sidelink communication, the union may be selected as the candidate resource for the retransmission data unit.

When the first terminal performs the sidelink communication in a multicast scheme or a broadcast scheme, the candidate resource may be selected without considering the first resource set.

When the first resource set information is not resource set information for the first terminal, the candidate resource may be selected without considering the first resource set indicated by the first resource set information.

The operation method may further comprise: receiving second resource set information from a third terminal; and selecting one resource set information from among the first resource set information and the second resource set information based on a preconfigured criterion, wherein the one resource set information is the first resource set information related to the selecting of the candidate resource.

A resource set used to select the candidate resource may be determined based on a distance between the first terminal and a fourth terminal with which the first terminal performs sidelink communication.

When the first terminal performs a discontinuous reception (DRX) operation and a period during which the resource sensing operation of the first terminal is performed overlaps with an off-duration according to the DRX operation, the candidate resource may be selected without consideration of the second resource set.

When the first terminal performs a DRX operation, and an overlapping time between a period during which the resource sensing operation of the first terminal is performed and an off-duration according to the DRX operation is greater than or equal to a threshold, the candidate resource may be selected without consideration of the second resource set, and when the overlapping time between the period during which the resource sensing operation of the first terminal is performed and the off-duration according to the DRX operation is less than the threshold, the candidate resource may be selected in consideration of the second resource set.

A first terminal, according to a second exemplary embodiment of the present disclosure for achieving the above-described objective, may comprise a processor and a memory storing one or more instructions executable by the processor, and the one or more instructions may be executed to perform: receiving first resource set information from a second terminal; selecting a candidate resource based on at least one of a first resource set indicated by the first resource set information or a second resource set determined by a resource sensing operation performed in the first terminal; and performing sidelink communication based on the candidate resource, wherein the first resource set is a preferred resource set or a not-preferred resource set.

The one or more instructions may be further executed to perform: receiving a resource type indicator indicating whether the first resource set is the preferred resource set or the not-preferred resource set.

When the resource sensing operation is not performed in the first terminal, the candidate resource may be selected in consideration of only the first resource set.

When both the first resource set and the second resource set are considered for selection of the candidate resource, the candidate resource may be selected as an intersection of the first resource set and the second resource set, a difference between the first resource set and the second resource set, or a union of the first resource set and the second resource set.

When an initial transmission data unit is transmitted in the sidelink communication, the intersection or the difference may be selected as the candidate resource for the initial transmission data unit, and when a retransmission data unit is transmitted in the sidelink communication, the union may be selected as the candidate resource for the retransmission data unit.

When the first terminal performs the sidelink communication in a multicast scheme or a broadcast scheme, the candidate resource may be selected without considering the first resource set.

The one or more instructions may be further executed to perform: receiving second resource set information from a third terminal; and selecting one resource set information from among the first resource set information and the second resource set information based on a preconfigured criterion, wherein the one resource set information is the first resource set information related to the selecting of the candidate resource.

A resource set used to select the candidate resource may be determined based on a distance between the first terminal and a fourth terminal with which the first terminal performs sidelink communication.

When the first terminal performs a DRX operation, and an overlapping time between a period during which the resource sensing operation of the first terminal is performed and an off-duration according to the DRX operation is greater than or equal to a threshold, the candidate resource may be selected without consideration of the second resource set, and when the overlapping time between the period during which the resource sensing operation of the first terminal is performed and the off-duration according to the DRX operation is less than the threshold, the candidate resource may be selected in consideration of the second resource set.

### [Advantageous Effects]

According to the present disclosure, a user equipment (UE)-B may receive resource set information (e.g., preferred resource set information, not-preferred resource set information) from a UE-A. The UE-B may select candidate resource(s) in consideration of the resource set information of the UE-A, and may perform sidelink communication based on the candidate resource(s). Alternatively, the UE-B may select candidate resource(s) without considering the resource set information of the UE-A and perform sidelink communication based on the candidate resource(s). Accordingly, the UE-B can efficiently select the candidate resource(s) according to a current situation, and thus the performance of sidelink communication can be improved.

### [Description of Drawings]

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a UE performing sidelink communication.
FIG. 5 is a block diagram illustrating a first exemplary embodiment of a control plane protocol stack of a UE performing sidelink communication.
FIG. 6 is a block diagram illustrating a second exemplary embodiment of a control plane protocol stack of a UE performing sidelink communication.
FIG. 7 is a sequence chart illustrating a first exemplary embodiment of a mode 2-based sidelink communication method.
FIG. 8A is a conceptual diagram illustrating a first exemplary embodiment of a method for selecting candidate resource(s) based on Method 21.
FIG. 8B is a conceptual diagram illustrating a first exemplary embodiment of a method for selecting candidate resource(s) based on Method 22.
FIG. 8C is a conceptual diagram illustrating a first exemplary embodiment of a method for selecting candidate resource(s) based on Method 23.
FIG. 9A is a conceptual diagram illustrating a second exemplary embodiment of a method for selecting candidate resource(s) based on Method 21.
FIG. 9B is a conceptual diagram illustrating a second exemplary embodiment of a method for selecting candidate resource(s) based on Method 22.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In exemplary embodiments of the present disclosure, '(re)transmission' may refer to `transmission', 'retransmission', or `transmission and retransmission', '(re)configuration' may refer to `configuration', `reconfiguration', or 'configuration and reconfiguration', `(re)connection' may refer to 'connection', 'reconnection', or 'connection and reconnection', and `(re)access' may refer to 'access', `re-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

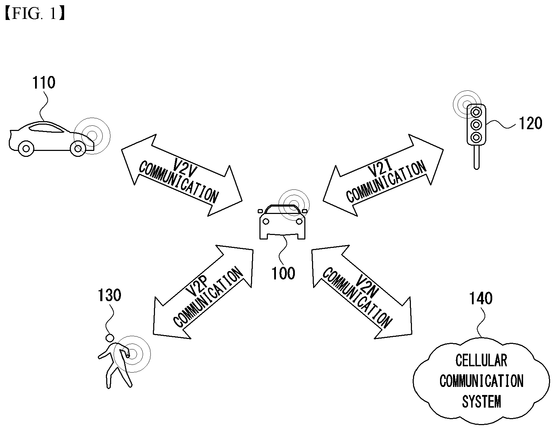

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g., a cellular communication system 140), and the V2X communications supported by the cellular communication system 140 may be referred to as "Cellular-V2X (C-V2X) communications." Here, the cellular communication system 140 may include the 4G communication system (e.g., LTE communication system or LTE-A communication system), the 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported in the cellular communication system 140 may be performed based on "sidelink" communication technologies (e.g., ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g., the communication node located in the vehicle 100) and an infrastructure (e.g., road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g., ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g., the communication node located in the vehicle 100) and a server connected through the cellular communication system 140. The V2N communications may be performed based on the 4G communication technology (e.g., LTE or LTE-A) or the 5G communication technology (e.g., NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

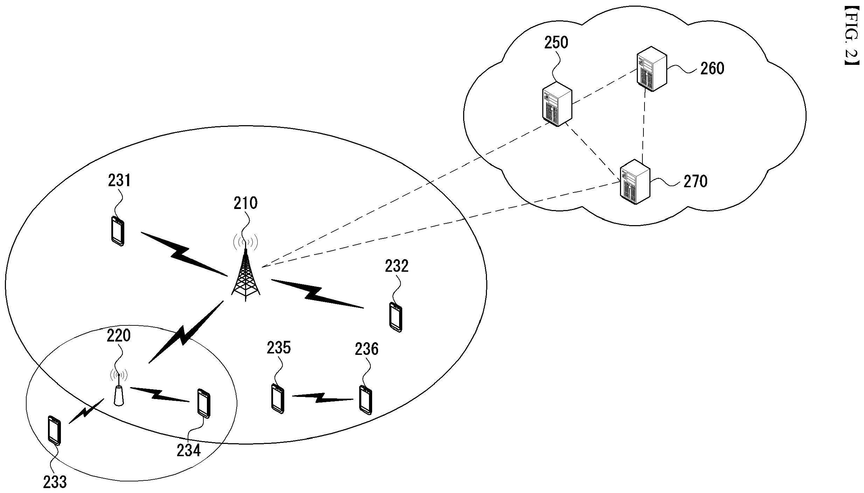

FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slice configured in the core network.

The communication nodes (e.g., base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) comprising the cellular communication system may be configured as follows.

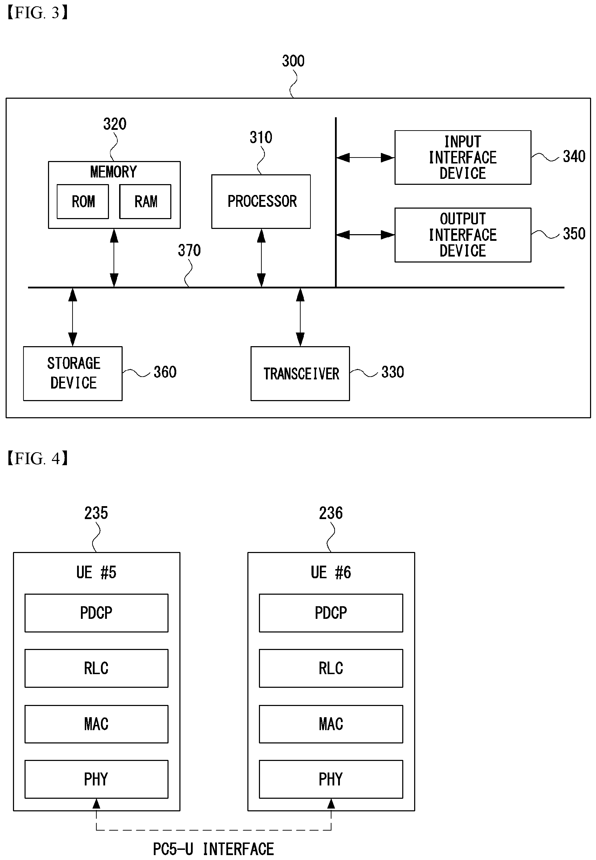

FIG. 3 is a conceptual diagram illustrating an exemplary embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

FIG. 4 is a block diagram illustrating an exemplary embodiment of a user plane protocol stack of a UE performing sidelink communication.

As shown in FIG. 4, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications (e.g., V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

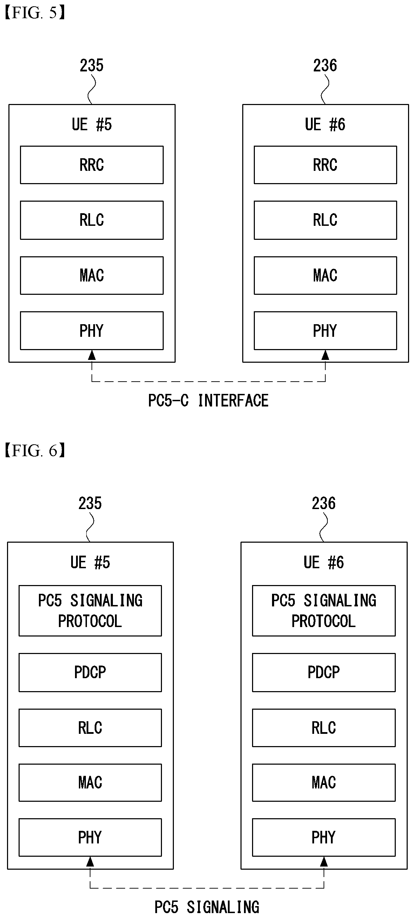

FIG. 5 is a block diagram illustrating a first exemplary embodiment of a control plane protocol stack of a UE performing sidelink communication, and FIG. 6 is a block diagram illustrating a second exemplary embodiment of a control plane protocol stack of a UE performing sidelink communication.

As shown in FIGS. 5 and 6, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g., Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by a higher layer signaling. The PSCCH may be used for transmitting and receiving sidelink control information (SCI) and may also be configured in the UE (e.g., UE 235 or 236) by a higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for higher layer signaling may be referred to as a `higher layer message' or `higher layer signaling message'. A message used for MAC signaling may be referred to as a `MAC message' or `MAC signaling message'. A message used for PHY signaling may be referred to as a `PHY message' or `PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as `first-stage SCI', and the 2nd-stage SCI may be referred to as `second-stage SCI'. A format of the first-stage SCI may include a SCI format 1-A, and a format of the second-stage SCI may include a SCI format 2-A and a SCI format 2-B.

The 1st-stage SCI may include or more information elements among priority information, frequency resource assignment information, time resource assignment information, resource reservation period information, demodulation reference signal (DMRS) pattern information, 2nd-stage SCI format information, a beta_offset indicator, the number of DMRS ports, and modulation and coding scheme (MCS) information. The 2nd-stage SCI may include one or more information elements among a HARQ processor identifier (ID), a redundancy version (RV), a source ID, a destination ID, CSI request information, a zone ID, and communication range requirements.

Meanwhile, the UE may perform sidelink communication based on a mode 2 (e.g., sidelink TM 2 or 4 defined in Table 2). In this case, sidelink transmissions may collide due to a hidden node problem, an exposed node problem, a half-duplex operation problem, and/or the like. To solve this problem, an inter-UE coordination operation may be performed. When the inter-UE coordination operation is supported, a UE-A may transmit resource set information to a UE-B, and the UE-B may perform a resource selection operation in consideration of the resource set information. Alternatively, the UE-B may perform a resource selection operation without considering the resource set information. The resource set information may be referred to as coordination information. In exemplary embodiments, the UE-A may be a receiving UE, a coordinating UE, or a UE performing a role similar to a coordinating UE, and the UE-B may be a transmitting UE. The transmitting UE may be a UE transmitting sidelink (SL) data, and the receiving UE may be a UE receiving the SL data. The coordinating UE may be a UE that supports (or coordinates) sidelink communication between UEs.

The UE-A may transmit information on a preferred resource set and/or a not-preferred resource set for transmission of the UE-B to the UE-B. The preferred resource set and/or the not-preferred resource set may be determined based on a result of a resource sensing operation performed by the UE-A. The resource set may include one or more physical resources. The resource set information (e.g., preferred resource set information and/or not-preferred resource set information) may be transmitted according to a request of the UE-B. For example, the UE-B may transmit a triggering message or a requesting message to the UE-A. When the triggering message or requesting message is received from the UE-B, the UE-A may transmit the resource set information to the UE-B. Alternatively, when a preconfigured condition (e.g., triggering condition or event) is satisfied, the UE-A may transmit the resource set information to the UE-B. The resource set information may be transmitted through a PSCCH, PSSCH, and/or PSFCH.

Upon receiving the resource set information, the UE-B may operate as follows. For example, the UE-B may select candidate resource(s) for sidelink communication (e.g., PSCCH and/or PSSCH transmission) based only on the resource set information received from the UE-A. This method may be referred to as `Method 10'. Alternatively, the UE-B may select candidate resource(s) for sidelink communication based on the resource set information received from the UE-A and a result of a resource sensing operation performed by the UE-B. This method may be referred to as `Method 20'. In exemplary embodiments, `selection of candidate resource(s)' may be interpreted broadly as 'performing sidelink communication based on the candidate resource(s)', and 'performing sidelink communication based on the candidate resource(s)' may be interpreted broadly as `performing sidelink communication using transmission resource(s) selected within the candidate resource(s)'.

The UE-B may select one of Method 10 and Method 20 based on an information element included in the resource set information received from the UE-A and/or an information element received together with the resource set information. Alternatively, the UE-B may select one of Method 10 and Method 20 based on at least one of a quality of service (QoS) parameter (e.g., reliability, latency) of transmission resource(s), the number of transmissions of a transport block (TB), priority, or cast type, and select candidate resource(s) based on the selected method. The cast type may indicate a broadcast scheme, a multicast scheme, a group cast scheme, and/or a unicast scheme.

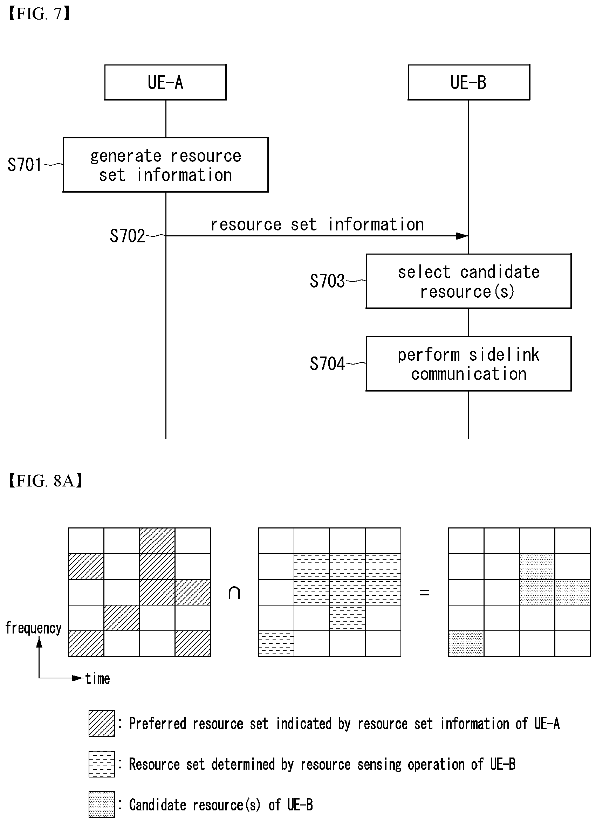

FIG. 7 is a sequence chart illustrating a first exemplary embodiment of a mode 2-based sidelink communication method.

As shown in FIG. 7, a communication system may include a UE-A and a UE-B. The UE-A may be the UE 235 shown in FIG. 2, and the UE-B may be the UE 236 shown in FIG. 2. Each of the UE-A and the UE-B may be configured identically or similarly to the communication node 300 shown in FIG. 3. The UE-A and the UE-B may support the protocol stacks shown in FIGS. 4 to 6. In exemplary embodiments, the UE may mean a terminal, the UE-A may be referred to as a terminal-A, a first terminal, or a second terminal, and the UE-B may be referred to as a terminal-B, a first terminal, or a second terminal.

The UE-A may generate resource set information (e.g., coordination information) (S701). The UE-A may generate the resource set information according to a request of the UE-B. Alternatively, the UE-A may generate the resource set information when a preconfigured condition is satisfied. The UE-A may generate the resource set information based on a result of performing a resource sensing operation. The resource set information may include one or more information elements defined in Table 3 below. The resource set information may include the information element(s) to assist a resource selection operation in the UE-B. In Table 3 below, a resource may mean a resource set.

**[Table 3]**

| **Information elements** |
|---|
| Information on preferred resource(s) or recommended resource(s) for transmission of UE-B |
| Channel state information (CSI) of resource(s) preferred or recommended for transmission of UE-B |
| Information on not-preferred resource(s) or not-recommended resource(s) for transmission of UE-B |
| Power control information |
| Source ID (of maximum or minimum length) |
| Destination ID (of maximum or minimum length) |
| DMRS pattern (preferred by a receiving UE) |
| MIMO enhancement information |
| Information for inferring a distance between communication nodes (i.e., distance information) |
| Information on reserved resources when a plurality of resources (e.g., three or more resources) are reserved for a single PSCCH/PSSCH |
| Information on released resource(s) |
| Information on resource(s) which were reserved but not used |
| Transmission power information |
| Continuous collision information |
| DRX parameter(s) |
| Information which was not received due to a half- duplex operation during a transmission operation of a transmitting UE |
| RSRP value |
| Resource conflict information |

The preferred resource, not-preferred resource, recommended resource, and/or not-recommended resource may be determined based on at least one of a result of the resource sensing operation performed by the UE-A, a detected resource conflict, or an expected resource conflict or potential resource conflict. The detected resource conflict, expected resource conflict, and/or potential resource conflict may occur within resources indicated by SCI of the UE-B.

The UE-A may transmit the resource set information to the UE-B (S702). The UE-A may transmit the resource set information to the UE-B according to a request of the UE-B. Alternatively, when a preconfigured condition is satisfied, the UE-A may transmit the resource set information to the UE-B. The UE-B may receive the resource set information from the UE-A, and may identify information element(s) included in the resource set information (e.g., information element(s) defined in Table 3). The UE-B may select candidate resource(s) using one of Method 10, Method 20, and Method 30 below (S703). The UE-B may perform sidelink communication using the candidate resource(s) or transmission resource(s) selected from the candidate resource(s) (S704). In the step S704, the UE-B may perform sidelink communication with the UE-A. Alternatively, in the step S704, the UE-B may perform sidelink communication with another UE (e.g., UE-C) other than the UE-A. In exemplary embodiments, the operation of selecting candidate resource(s) may be extended and interpreted as an operation of reselecting candidate resource(s).
- **Method 10:** The UE-B may select candidate resource(s) using only the resource set information received from the UE-A.
- **Method 20:** The UE-B may select candidate resource(s) based on the resource set information received from the UE-A and a result of a resource sensing operation performed by the UE-B.
- **Method 30:** The UE-B may select candidate resource(s) without considering the resource set information received from the UE-A. In this case, the UE-B may select candidate resource(s) based on a result of a resource sensing operation performed by the UE-B.

### Exemplary embodiment using Method 10

When Method 10 is used, the UE-B may select candidate resource(s) using only the resource set information received from the UE-A. For example, the UE-B may select candidate resource(s) in consideration of the preferred resource set and/or the not-preferred resource set indicated by the resource set information. The UE-B unable to perform a resource sensing operation may perform a resource selection operation (e.g., random resource selection operation) within the preferred resource set indicated by the resource set information received from the UE-A. Alternatively, the UE-B unable to perform a resource sensing operation may perform a resource selection operation (e.g., random resource selection operation) in a resource region other than the not-preferred resource set indicated by the resource set information received from the UE-A. Here, the UE-B may not perform a resource sensing operation to save power.

In order to support the above-described operation, information (e.g., 1-bit indicator) indicating whether a resource set indicated by the resource set information is a preferred resource set or a not-preferred resource set may be required. The corresponding information may be referred to as `resource type indicator'. For example, a resource type indicator set to a first value (e.g., 0) may indicate that the resource set indicated by the resource set information is the preferred resource set, and a resource type indicator set to a second value (e.g., 1) may indicate that the resource set indicated by the resource set information is the not-preferred resource set. The resource type indicator may be included in the resource set information. Alternatively, the UE-A may transmit the resource type indicator to the UE-B using at least one of PC5-RRC signaling, MAC control element (CE), first stage SCI, second stage SCI, PSCCH, PSSCH, or PSFCH.

A resource pool (e.g., transmission resource pool) for mode 2 may be preconfigured. The resource pool for mode 2 may be referred to as `mode 2 resource pool'. The mode 2 resource pool may be configure to enable a resource selection operation (e.g., random resource selection operation) to be performed. It may be configured that only the UE-A performs a resource sensing operation within the mode 2 resource pool, and the UE-A may transmit a result of the resource sensing operation (e.g., preferred resource set and/or not-preferred resource set) to the UE-B. When the resource set information is configured to indicate only a preferred resource set (within the mode 2 resource pool) or when the resource set information is configured to indicate only a not-preferred resource set (within the mode 2 resource pool), the resource type indicator may not be required.

### Exemplary embodiment using Method 20

When Method 20 is used, the UE-B may select candidate resource(s) based on the resource set information received from the UE-A and a result of a resource sensing operation performed by the UE-B. Method 20 may be subdivided into Method 21, Method 22 and Method 23.
- **Method 21:** The UE-B may select an intersection between the preferred resource set indicated by the resource set information received from the UE-A and a resource set determined in the resource sensing operation performed by the UE-B as candidate resource(s).
- **Method 22:** The UE-B may a difference between the resource set determined in the resource sensing operation performed by the UE-B and the not-preferred resource set indicated by the resource set information received from the UE-A as candidate resource(s).
- **Method 23:** The UE-B may select a union between the preferred resource set indicated by the resource set information received from the UE-A and the resource set determined in the resource sensing operation performed by the UE-B as candidate resource(s).

FIG. 8A is a conceptual diagram illustrating a first exemplary embodiment of a method for selecting candidate resource(s) based on Method 21.

As shown in FIG. 8A, the UE-B may receive resource set information including information on a first preferred resource set from the UE-A. The UE-B may determine a resource set (e.g., second preferred resource set) by performing a resource sensing operation. The UE-B may determine an intersection of the first preferred resource set and the second preferred resource set as candidate resource(s).

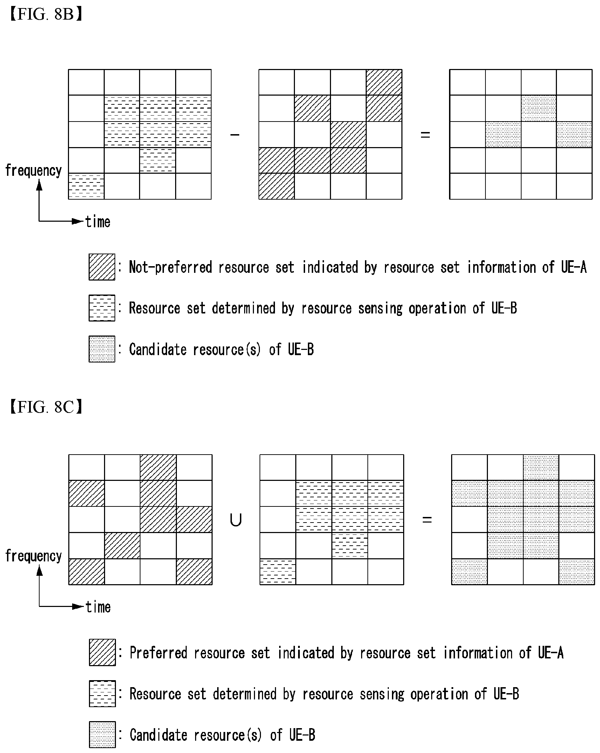

FIG. 8B is a conceptual diagram illustrating a first exemplary embodiment of a method for selecting candidate resource(s) based on Method 22.

As shown in FIG. 8B, the UE-B may receive resource set information including information on a first not-preferred resource set from the UE-A. The UE-B may determine a resource set (e.g., second preferred resource set) by performing a resource sensing operation. The UE-B may determine a difference between the second preferred resource set and the first not-preferred resource set as candidate resource(s).

FIG. 8C is a conceptual diagram illustrating a first exemplary embodiment of a method for selecting candidate resource(s) based on Method 23.

As shown in FIG. 8C, the UE-B may receive resource set information including information on a first preferred resource set from the UE-A. The UE-B may determine a resource set (e.g., second preferred resource set) by performing a resource sensing operation. The UE-B may determine a union of the first preferred resource set and the second preferred resource set as candidate resource(s).

### Exemplary embodiment using Method 30

The UE-B may select candidate resource(s) without using the resource set information received from the UE-A. Even when information on a preferred resource set or a not-preferred resource set is received from the UE-A, the UE-B may ignore the corresponding resource set information. That is, the UE-B may select candidate resource(s) without considering the preferred resource set or the not-preferred resource set indicated by the UE-A.

For example, when the UE-B performs sidelink communication based on a multicast scheme or a broadcast scheme, the UE-B may ignore the resource set information received from the UE-A. Since the resource set information is highly unlikely to be applied to other UE(s) receiving data transmitted in the multicast or broadcast scheme, the UE-B may ignore the resource set information received from the UE-A. A UE supporting a multicast scheme or broadcast scheme may transmit information of a not-preferred resource set to other UE(s). The not-preferred resource set may be used for sidelink communication in a UE supporting a multicast scheme or a broadcast scheme. In this case, the UE supporting a multicast scheme or a broadcast scheme may operate similarly the UE-A.

Meanwhile, the UE-B may receive a plurality of pieces of resource set information from a plurality of UE-As. The plurality of UE-As may include a first UE-A and a second UE-A. The plurality of UE-As may form a UE group. The UE-B may select one resource set information from among the plurality of pieces of resource set information, and may select candidate resource(s) in consideration of the selected one resource set information. Here, the UE-B may select the one resource set information from among the plurality of pieces of resource set information based on at least one of a QoS parameter (e.g., reliability, latency) of transmission resource(s), the number of transmissions of a transport block (TB), priority, and cast type. Method 30 may be applied to the remaining resource set information excluding the one resource set information selected by the UE-B from among the plurality of pieces of resource set information.

The UE-B may perform Method 30 based on some information element(s) (e.g., source ID and/or destination ID) included in the resource set information received from the UE-A. The UE-B may determine whether the corresponding resource set information is resource set information for itself by using the source ID and/or the destination ID included in the resource set information. If the resource set information received from the UE-A is not resource set information for the UE-B, the UE-B may perform Method 30.

Meanwhile, the UE-B may select one of Method 10, Method 20, and Method 30 based on the cast type. In exemplary embodiments, 'selection of a method' may be interpreted as 'performing the selected method'. The operation of the UE-A and/or the operation of the UE-B may be selected based on the cast type. In this case, a signaling operation of a resource type indicator may be required in a procedure in which the UE-A transmits resource set information to the UE-B. The resource type indicator may indicate whether resource set information associated with the corresponding resource type indicator indicates a preferred resource set or a not-preferred resource set. The resource type indicator may be transmitted through at least one of MAC CE, PC5-RRC signaling, first stage SCI, second stage SCI, PSCCH, PSSCH, or PSFCH.

The UE-B may select one of Methods 10, 20, and 30 based on at least one of a QoS parameter (e.g., reliability, latency) of transmission resources, the number of transmissions of TB, or priority. For example, when the UE-B has a small latency budget of transmission resources, the UE-B may select Method 23. When the reliability of transmission resources is important to the UE-B, the UE-B may select Method 21 or Method 22.

The UE-A may transmit resource set information to a plurality of UE-Bs. The plurality of UE-Bs may include a first UE-B and a second UE-B. The plurality of UE-Bs may form a UE group. When a priority (or reliability) of data of the first UE-B to be transmitted in a resource indicated by the resource set information received from the UE-A is higher than a priority (or reliability) of data of the second UE-B to be transmitted in the resource indicated by the resource set information received from the UE-A, the first UE-B or the second UE-B may select one of Methods 21, 22, and 23.

The UE-A may transmit information on a preferred resource set (e.g., the same preferred resource set) to the first UE-B and/or the second UE-B. In this case, the first UE-B may select Method 21, and may select candidate resource(s) based on Method 21. The second UE-B may select Method 22, and may select candidate resource(s) based on Method 22. In the above-described case, a resource type indicator may not be required. Accordingly, the UE-A may not transmit a resource type indicator to the first UE-B and the second UE-B. The above-described operation may be applied when two or more UE-Bs exist.

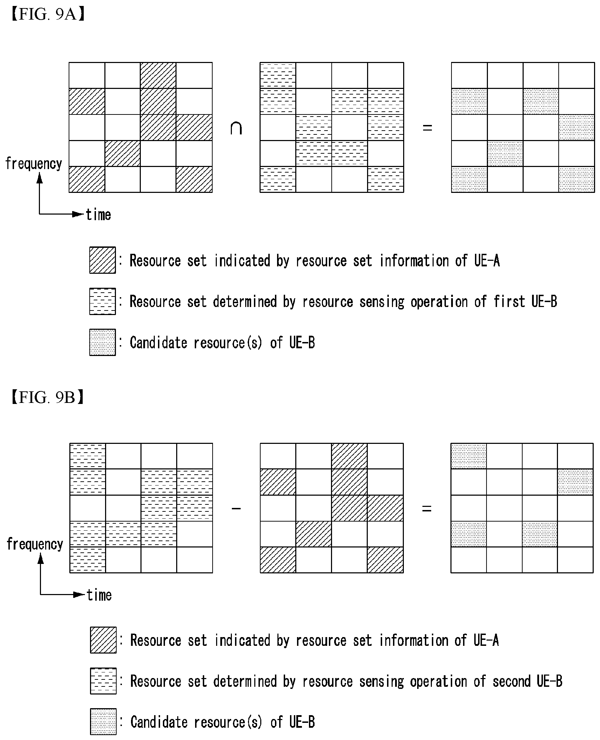

FIG. 9A is a conceptual diagram illustrating a second exemplary embodiment of a method for selecting candidate resource(s) based on Method 21.

As shown in FIG. 9A, the first UE-B may receive resource set information from the UE-A. The first UE-B may determine a resource set by performing a resource sensing operation. The first UE-B may determine an intersection of the resource set indicated by the resource set information of the UE-A and the resource set determined by the resource sensing operation of the first UE-B as candidate resource(s). Here, a resource type indicator may not be required.

FIG. 9B is a conceptual diagram illustrating a second exemplary embodiment of a method for selecting candidate resource(s) based on Method 22.

As shown in FIG. 9B, the second UE-B may receive resource set information from the UE-A. The second UE-B may determine a resource set by performing a resource sensing operation. The second UE-B may determine a difference between the resource set determined by the resource sensing operation of the second UE-B and the resource set indicated by the resource set information of the UE-A as candidate resource(s). Here, a resource type indicator may not be required.

Meanwhile, different methods may be used in a transmission procedure of data units (e.g., TBs). For example, the UE-B may transmit a first data unit (e.g., first TB) using Method 21 or Method 22, and transmit a second data unit (e.g., second TB) using Method 10 or Method 30, and transmit a third data unit (e.g., third TB) using Method 23. The first data unit, the second data unit, and the third data unit may be different data units. Alternatively, the first data unit may be an initial transmission data unit, and the second and third data units may be retransmission data units. The maximum number of retransmissions of a data unit may be 3. A method (e.g., Methods 10, 20, 21, 22, 23, 30) may be selected so that the number of candidate resources increases as the number of data unit transmissions increases. For example, candidate resource(s) for an initial transmission data unit may be selected based on Method 21 or Method 22, and candidate resource(s) for a retransmission data unit may be selected based on Method 23. According to the above-described operation, the transmission operation of data units in the UE-B may be successfully completed.

The UE-B may select a method for selecting candidate resource(s) based on a combination of information on a resource set (e.g., preferred resource set or not-preferred resource set) received from the UE-A and other information. For example, the UE-B may receive, from the UE-A, resource set information and information (e.g., reference signal received power (RSRP) value) for inferring a distance between the UE-B and a UE-X, and select candidate resource(s) based on the corresponding information. Instead of the RSRP, other parameters (e.g., received signal strength indicator (RSSI), reference signal received quality (RSRQ)) may be used. The UE-X may be the UE-A or another UE other than the UE-A. The UE-X may be a UE performing sidelink communication with the UE-B. If a difference between an RSRP value for the UE-X measured by the UE-B and the RSRP value for the UE-X received from the UE-A is greater than or equal to a threshold, the UE-B may use one of the methods described above to determine candidate resource(s). Alternatively, if the difference between the RSRP value for the UE-X measured by the UE-B and the RSRP value for the UE-X received from the UE-A is less than a threshold, the UE-B select one of the methods described above to determine candidate resource(s). Alternatively, when the RSRP value (e.g., absolute value) for the UE-X received from the UE-A is greater than or equal to a threshold, the UE-B may determine candidate resource(s) using one of the methods described above.

The UE-B may select a method for selecting candidate resource(s) based on its operating state. For example, when the UE-B is not able to perform a resource sensing operation, the UE-B may select candidate resource(s) based on Method 10 or Method 30. When the UE-B performs a discontinuous reception (DRX) operation, a period of a resource sensing operation of the UE-B may overlap (e.g., partially or fully overlap) with an off-duration according to the DRX operation. In this case, the UE-B may not be able to perform a resource sensing operation. Therefore, the UE-B may select candidate resource(s) based on Method 10 or Method 30.

Based on a time (e.g., time ratio) during which a period of a resource sensing operation of the UE-B overlaps with an off-duration according to the DRX operation or a time (e.g., time ratio) during which a period of a resource sensing operation of the UE-B does not overlap with an off-duration according to the DRX operation, the UE-B may determine a method for selecting candidate resource(s). For example, if the time (e.g., time ratio) during which the period of the resource sensing operation of the UE-B overlaps with an off-duration according to the DRX operation is greater than or equal to a threshold, the UE-B may select Method 10 or Method 30 to select candidate resource(s). If the time (e.g., time ratio) during which the period of the resource sensing operation of the UE-B does not overlap with an off-duration according to the DRX operation is less than a threshold, the UE-B may use Method 20 (e.g., Method 21, Method 22, or Method 23) to select candidate resource(s). The base station may configure the threshold(s) to the UE(s). Alternatively, the threshold(s) may be configured through signaling between the UEs (e.g., PC5-RRC signaling). The threshold(s) may be configured to be resource pool-specific or service-specific.

The above-described operation of the UE (e.g., UE-A and/or UE-B) (e.g., method selection operation) may be configured specifically, independently, or commonly based on at least one of a resource pool, service type, priority, whether to perform a power saving operation, QoS parameters (e.g., reliability, latency), cast type, or terminal type (e.g., vehicle (V)-UE or pedestrian (P)-UE). The above configuration may be performed by a network and/or a base station. Alternatively, the above-described operation (e.g., method selection operation) of the UE (e.g., UE-A and/or UE-B) may be implicitly determined based on preconfigured parameter(s).

In the above-described exemplary embodiment, whether to apply each method (e.g., each rule) may be configured based on at least one of a condition, a combination of conditions, a parameter, or a combination of parameters. Whether each method is applied may be configured by a network and/or a base station. Whether to apply each method may be configured in a resource pool or service specific manner. Alternatively, whether to apply each method may be configured by PC5-RRC signaling between the UEs.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions and alterations may be made herein without departing from the scope of the present disclosure.

## Claims

1. An operation method of a first terminal in a communication system, the operation method comprising:
receiving first resource set information from a second terminal;
selecting a candidate resource based on at least one of a first resource set indicated by the first resource set information or a second resource set determined by a resource sensing operation performed in the first terminal; and
performing sidelink communication based on the candidate resource,
wherein the first resource set is a preferred resource set or a not-preferred resource set.

2. The operation method according to claim 1, further comprising: receiving a resource type indicator indicating whether the first resource set is the preferred resource set or the not-preferred resource set.

3. The operation method according to claim 1, wherein when the resource sensing operation is not performed in the first terminal, the candidate resource is selected in consideration of only the first resource set.

4. The operation method according to claim 1, wherein when both the first resource set and the second resource set are considered for selection of the candidate resource, the candidate resource is selected as an intersection of the first resource set and the second resource set, a difference between the first resource set and the second resource set, or a union of the first resource set and the second resource set.

5. The operation method according to claim 4, wherein when an initial transmission data unit is transmitted in the sidelink communication, the intersection or the difference is selected as the candidate resource for the initial transmission data unit, and when a retransmission data unit is transmitted in the sidelink communication, the union is selected as the candidate resource for the retransmission data unit.

6. The operation method according to claim 1, wherein when the first terminal performs the sidelink communication in a multicast scheme or a broadcast scheme, the candidate resource is selected without considering the first resource set.

7. The operation method according to claim 1, wherein when the first resource set information is not resource set information for the first terminal, the candidate resource is selected without considering the first resource set indicated by the first resource set information.

8. The operation method according to claim 1, further comprising:
receiving second resource set information from a third terminal; and
selecting one resource set information from among the first resource set information and the second resource set information based on a preconfigured criterion,
wherein the one resource set information is the first resource set information related to the selecting of the candidate resource.

9. The operation method according to claim 1, wherein a resource set used to select the candidate resource is determined based on a distance between the first terminal and a fourth terminal with which the first terminal performs sidelink communication.

10. The operation method according to claim 1, wherein when the first terminal performs a discontinuous reception (DRX) operation and a period during which the resource sensing operation of the first terminal is performed overlaps with an off-duration according to the DRX operation, the candidate resource is selected without consideration of the second resource set.

11. The operation method according to claim 1, wherein when the first terminal performs a DRX operation, and an overlapping time between a period during which the resource sensing operation of the first terminal is performed and an off-duration according to the DRX operation is greater than or equal to a threshold, the candidate resource is selected without consideration of the second resource set, and when the overlapping time between the period during which the resource sensing operation of the first terminal is performed and the off-duration according to the DRX operation is less than the threshold, the candidate resource is selected in consideration of the second resource set.

12. A first terminal in a communication system, comprising:
a processor; and
a memory storing one or more instructions executed by the processor,
wherein the one or more instructions are executed to perform:
receiving first resource set information from a second terminal;
selecting a candidate resource based on at least one of a first resource set indicated by the first resource set information or a second resource set determined by a resource sensing operation performed in the first terminal; and
performing sidelink communication based on the candidate resource,
wherein the first resource set is a preferred resource set or a not-preferred resource set.

13. The first terminal according to claim 12, wherein the one or more instructions are further executed to perform: receiving a resource type indicator indicating whether the first resource set is the preferred resource set or the not-preferred resource set.

14. The first terminal according to claim 12, wherein when the resource sensing operation is not performed in the first terminal, the candidate resource is selected in consideration of only the first resource set.

15. The first terminal according to claim 12, wherein when both the first resource set and the second resource set are considered for selection of the candidate resource, the candidate resource is selected as an intersection of the first resource set and the second resource set, a difference between the first resource set and the second resource set, or a union of the first resource set and the second resource set.

16. The first terminal according to claim 15, wherein when an initial transmission data unit is transmitted in the sidelink communication, the intersection or the difference is selected as the candidate resource for the initial transmission data unit, and when a retransmission data unit is transmitted in the sidelink communication, the union is selected as the candidate resource for the retransmission data unit.

17. The first terminal according to claim 12, wherein when the first terminal performs the sidelink communication in a multicast scheme or a broadcast scheme, the candidate resource is selected without considering the first resource set.

18. The first terminal according to claim 12, wherein the one or more instructions are further executed to perform:
receiving second resource set information from a third terminal; and
selecting one resource set information from among the first resource set information and the second resource set information based on a preconfigured criterion,
wherein the one resource set information is the first resource set information related to the selecting of the candidate resource.

19. The first terminal according to claim 12, wherein a resource set used to select the candidate resource is determined based on a distance between the first terminal and a fourth terminal with which the first terminal performs sidelink communication.

20. The first terminal according to claim 12, wherein when the first terminal performs a DRX operation, and an overlapping time between a period during which the resource sensing operation of the first terminal is performed and an off-duration according to the DRX operation is greater than or equal to a threshold, the candidate resource is selected without consideration of the second resource set, and when the overlapping time between the period during which the resource sensing operation of the first terminal is performed and the off-duration according to the DRX operation is less than the threshold, the candidate resource is selected in consideration of the second resource set.
